# EUROPEAN PATENT APPLICATION

(11) **EP 4 804 530 A1**
(43) Date of publication of application: **09.09.2026**
(21) Application number: 25305291.4
(22) Date of filing: 05.03.2025
(51) Int. Cl.: H04N 19/55, H04N 19/563

(54) **DIRECTIONAL PADDING BASED ON GRADIENT ANALYSIS**

(71) Applicant: InterDigital CE Patent Holdings, SAS, 75017 Paris (FR)
(72) Inventor: BORDES, Philippe, 35890 LAILLE (FR); GALPIN, Franck, 35235 THORIGNE-FOUILLARD (FR); LE LEANNEC, Fabrice, 35830 BETTON (FR); NASER, Karam, 35250 MOUAZE (FR)
(74) Representative: Interdigital

(57) **Abstract**

A method is presented that comprises determining that a reference block to be padded intersects a reference picture. Responsive to the determining, gradients are analyzed inside a picture part located inside the reference picture to derive a dominant direction. A block part of the reference block located outside the reference picture is padded based on the dominant direction.

## Description

### BACKGROUND

The present application is related to methods and apparatuses for picture encoding and decoding using padding of reference block.

### BRIEF SUMMARY

Briefly stated, in one embodiment, a method is presented that comprises determining that a reference block to be padded intersects a reference picture. Responsive to the determining, gradients are analyzed inside a picture part located inside the reference picture to derive a dominant direction. A block part of the reference block located outside the reference picture is padded based on the dominant direction. A decoding method (an encoding method) is also presented that uses the padded reference block to decode (encode respectively) a current block. A computer readable storage medium having stored thereon instructions for implementing the methods is also presented. A computer program comprising program code instructions for implementing the methods is presented. A signal comprising a bitstream, formed by performing the method for encoding, is presented.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a block diagram illustrating an example system according to one or more embodiments of the present disclosure;
FIG. 2 is a block diagram illustrating an example video encoder according to one or more embodiments of the present disclosure;
FIG. 3 is a block diagram illustrating an example video decoder according to one or more embodiments of the present disclosure;
FIG. 4 illustrates three-sample wide/high L-shaped template used to derive a histogram of gradients (HoG);
FIG. 5A-5B illustrate examples where some samples of a reference block exceed the reference picture limits;
FIG. 5C illustrates a horizontal replication of reconstructed samples at a left border of the picture (left padding area);
FIG. 6 illustrates motion compensated padding of a reconstructed current picture at a left border of the picture (left padding area) for an inter coded block;
FIG. 7 illustrates a template matching padding at a top border of a picture ;
FIG. 8 depicts an example wherein some areas are padded with motion compensated padding and other areas are filled with replicating padding;
FIG. 9 illustrates on the fly motion compensated padding for a reference picture ;
FIG. 10 illustrates on the fly template matching padding for a reference picture;
FIG. 11A is a block diagram illustrating an example of a padding method according to one embodiment;
FIG. 11B is a block diagram illustrating an example of a padding method according to another embodiment;
FIG. 12 depicts a current block of a current picture and its reference block in a reference picture;
FIG. 13 illustrates examples of directional padding in a reference block from a dominant direction ;
FIG. 14 illustrates a method for on-the-fly padding according to one embodiment ;
FIG. 15 illustrates examples of directional picture padding;
FIG. 16 illustrates an example of directional picture padding with smoothed angular direction to tend towards perpendicular replication padding; and
FIG. 17 illustrates an example of using multiple directional padding for picture padding.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

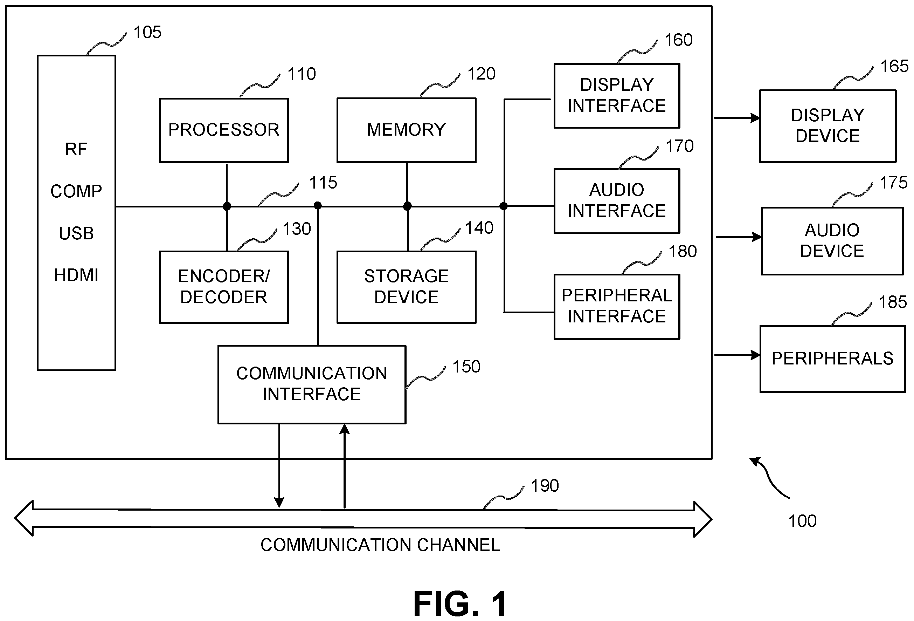

Referring to the drawings, there is shown in **FIG. 1** a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an intemal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

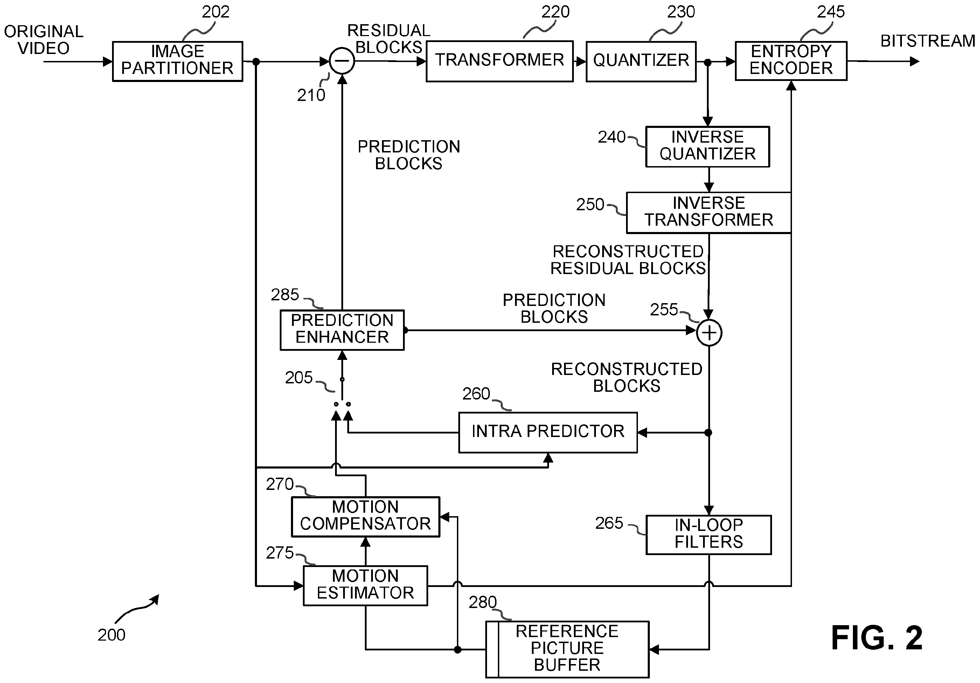

**FIG. 2** is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

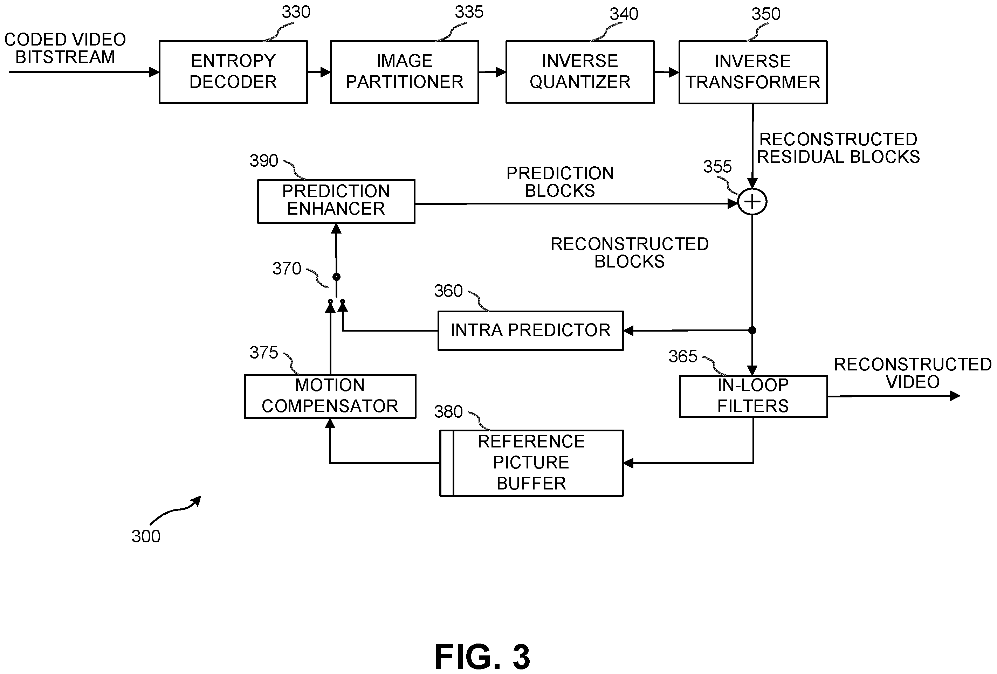

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, *Y,* and chroma components, *U* and *V* (also denoted herein by C).

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

**FIG. 3** is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

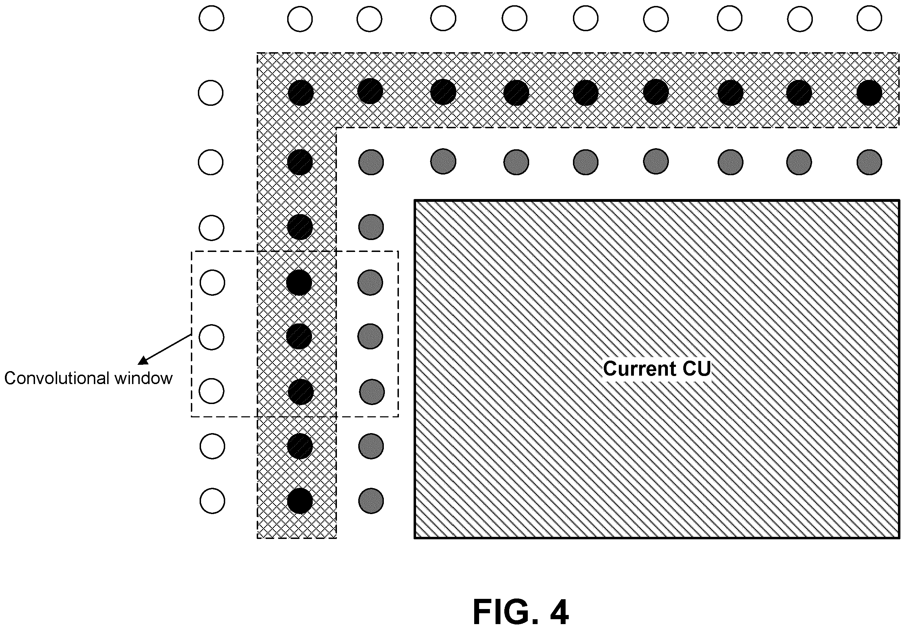

To derive an intra prediction mode for a block according to DIMD coding mode (acronym of Decoder-Side Intra Mode Derivation), a set of neighboring pixels is selected and a gradient analysis is performed on the set. **FIG. 4** illustrates three-sample wide/high L-shaped template used to derive a histogram of gradients (HoG). When DIMD is applied, up to five intra modes may be derived from reconstructed neighbor samples by analyzing the directionality of the content in the surrounding of the current block. Those five predictors may be combined with the non-directional predictor (planar or block vector based predictor) with weights derived from the histogram of gradients (HoG). The decision between the non-directional modes may be taken according to the template cost. HoG may be computed on a three-sample wide/high L-shaped template formed of already reconstructed samples (FIG. 4). The L-shape may be extended if the bottom-left and/or above-right samples are available. The histogram may be obtained using a Sobel filter, accumulating the magnitudes of all gradients in a given direction, e.g., for all the samples (black samples) within the hatched region of the L-shaped template (if they are available) in FIG. 4. The direction with highest cumulative magnitude (primary mode) may be stored in the IPM buffer. In an example, a simple 3x3 Sobel gradient filter may be used, defined by the following matrices that will be convoluted with the template: ${G}_{x} = \left[\begin{matrix}- 1 & 0 & 1 \\ - 2 & 0 & 2 \\ - 1 & 0 & 1\end{matrix}\right] and {G}_{y} = \left[\begin{matrix}- 1 & - 2 & - 1 \\ 0 & 0 & 0 \\ 1 & 2 & 1\end{matrix}\right]$ For a (each) black pixel of the template, each of these two matrices are multiplied point-by-point with the 3x3 window centered around a current pixel and the results are summed. Other Sobel filter kernel size may be used (2x2, ...). In this example of 3x3 kernel, the window comprises the current pixel and its 8 direct neighbors. Thus, two values are obtained Mₓ (from the multiplication with Gₓ), and M_{y} (from the multiplication with G_{y}) corresponding to the gradient at the current pixel, in the horizontal and vertical direction respectively.

For each black pixel, the intensity (M) and the orientation (O) of the gradient are computed using Mₓ and M_{y} as such: $M = \left|{M}_{x}\right| + \left|{M}_{y}\right| and O = atan \left(\frac{{M}_{y}}{{M}_{x}}\right)$ The orientation of the gradient is then converted into an intra angular prediction mode, used to index a histogram (first initialized to zero). The histogram value at that intra angular mode is increased by M. Once all the black pixels in the template are processed, the histogram contains cumulative values of gradient intensities, for each intra angular mode. The mode that shows the highest peak in the histogram is selected as intra prediction mode for the current block. If the maximum value in the histogram is 0 (meaning no gradient analysis was able to be made, or the area composing the template is flat), then the DC mode is selected as intra prediction mode for the current block.

In another example, the five directions with highest cumulative magnitude may be selected as main and secondary DIMD modes. The predictors obtained with the DIMD modes may then be blended to form the final DIMD prediction. Uniform or spatial blending may be used, where the DIMD predictors are combined with a non-directional predictor, using weights that depend on the relative magnitudes of the modes in the histogram of gradients.

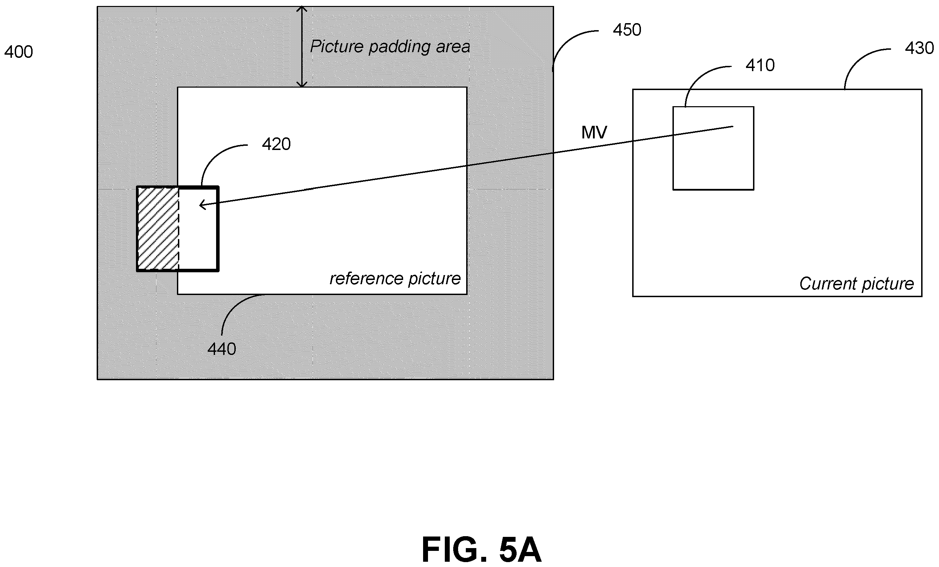

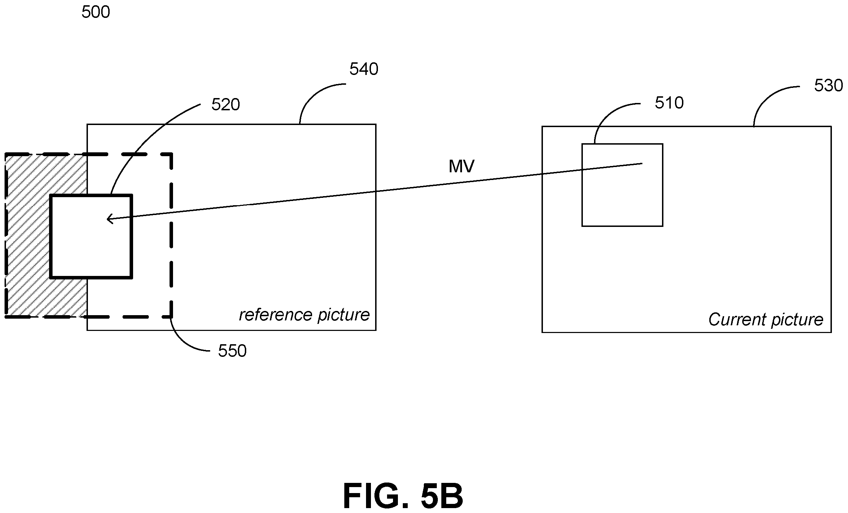

**FIG. 5A** and **FIG. 5B** illustrate cases (400, 500) where some samples of a reference block (hatched area in FIG. 5A) exceed the reference picture limits. Said otherwise, some samples of the reference block are located outside of the reference picture limits. In inter-prediction, a prediction of the current block (410, 510) is built with motion compensation of a reference block (420, 520) with same size in the reference picture (440, 540). The position of the reference block in the reference picture is determined with a motion vector MV which is the relative position of the reference block in the reference picture versus the position of the current block in the current picture (430, 530).

It may happen that some samples of the reference block exceed the reference picture limits as depicted in FIGs 5A and 5B. In such a case, the samples of the reference block outside the reference picture limit are undetermined. This may be avoided by constraining the value of the MV to be inside the reference picture boundaries, but the performance of the inter-prediction may be reduced. A preferred solution is to pad the reference picture with a padding area.

The padding may be carried out by adding a padding area around the reconstructed picture (FIG. 5A), but it requires additional storage for the decoding pictures buffer (DPB). Practical implementations would prefer performing the padding "on-the-fly" at the prediction stage using temporal buffer of same size as the reference block plus additional samples (550) to extend reference block (520). This extended area allows managing the motion compensation filter process which requires accessing additional samples out of the reference block corresponding to the number of filter taps.

Several methods of picture padding exist such as replication padding, motion compensated padding and template matching padding.

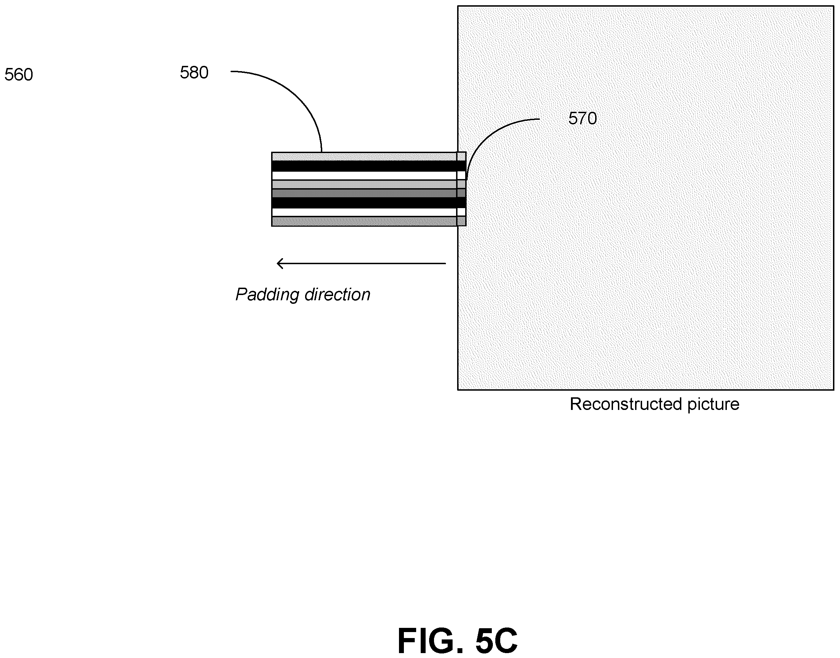

**FIG. 5C** illustrates a horizontal replication (560) of reconstructed samples at a left border of the picture (left padding area). The reconstructed samples (570) are replicated (580) perpendicularly to the picture borders. This simple technique suppresses the undetermined samples of the reference block, but it may introduce artificial high spatial frequencies (580).

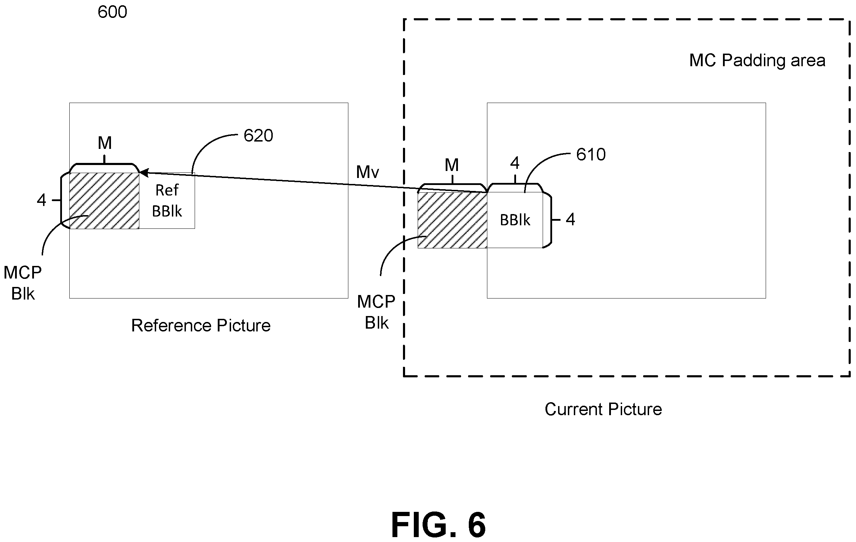

**FIG.6** illustrates motion compensated padding (600) of a reconstructed current picture at a left border of the picture (left padding area) for a block (610) coded in inter. Indeed, a current picture that is reconstructed may be further padded, e.g., before being stored in the DPB. If the current picture is inter coded, the samples outside of the picture boundary may be derived by motion compensation. For motion compensation padding, MV of a 4×4 boundary block (610) coded in inter mode may be utilized to derive a M×4 or 4×M padding block. The value M is derived as the distance of the reference block (620) to the picture boundary as shown on FIG. 6. M may be set at least equal to 4 as soon as the motion vector points to a position internal to the reference picture bounds. If boundary block is intra coded, then MV is not available, and M may be set equal to 0. If M is less than 64, the rest of the padded area may be filled with the repetitive padded samples.

In case of bi-directional inter prediction, only one prediction direction, which has a motion vector pointing to the pixel position farther away from the picture boundary in the reference picture in terms of the padding direction, may be used in MC boundary padding.

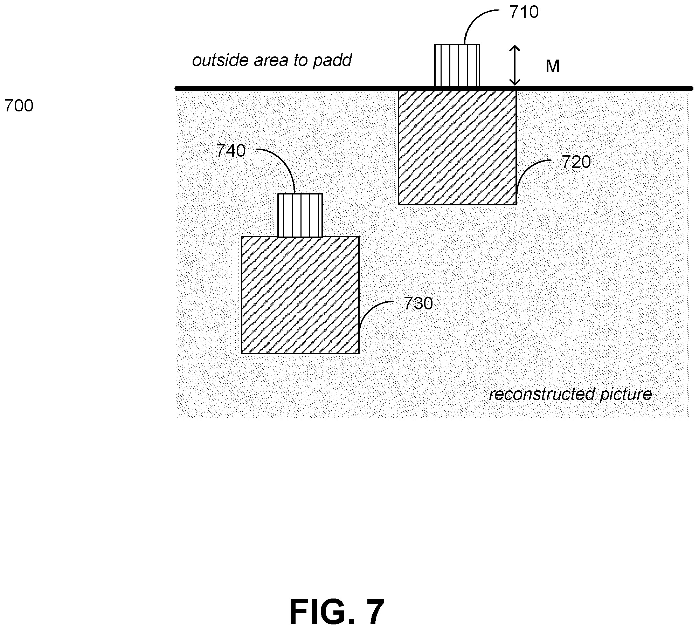

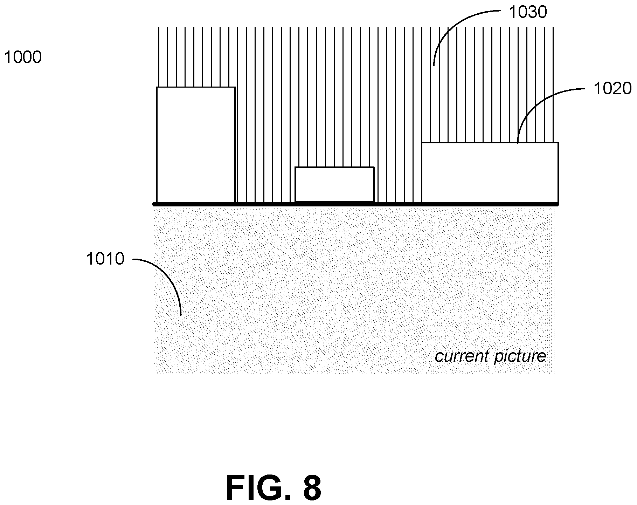

**FIG. 7** illustrates a template matching padding (700) at a top border of a picture. The template matching structure (730), target block (710) and source block (740) are shown. The outside area of the reference picture is divided into target blocks (710), which are predicted by template matching. First, a template (720) is defined adjacent to the target block. Then, a search is performed in a defined area for matching structures with the sum of absolute differences (SAD) as similarity metric. For the best matching structures (730), so called source blocks (740) are extracted and averaged to form the prediction for the target block. In an example, the search only considers the luma component. The value of M (padding area depth) may be set to 16. The remaining samples in the padding area may be completed with replicating (a.k.a. repetitive) padding. **FIG. 8** depicts an example (1000) wherein some areas are padded with motion compensated padding (1020) or template matching padding, and other areas are filled with replicating (a.k.a. repetitive) padding (1030).

In ECM, pictures may be extended by an area surrounding the picture with a size of (maxCUwidth + 16) in each direction of the picture boundary (maxCUwidth=256 for 4K and 128 for other picture sizes). This extension increases the size of the decoding picture buffer (DPB) significantly as shown in Table 1. In the existing video coding standards, for practical reasons (reducing the memory), the padding is performed on the fly at the prediction stage so that no additional memory is required. That's why only replicating (a.k.a. repetitive) padding has been implemented.

**Table 1: relative ratio of memory size required by padding area memory.**

| Picture type | Num picture samples | Num total samples including padded area | ratio of padded area vs picture |
|---|---|---|---|
| 4K 3840x2160 | 2073600 | 2963584 | 1,429198 |
| HD 1920x1080 | 8294400 | 11741184 | 1,415556 |
| C 832x480 | 399360 | 830208 | 2,078846 |
| D 416x240 | 99840 | 352256 | 3,528205 |

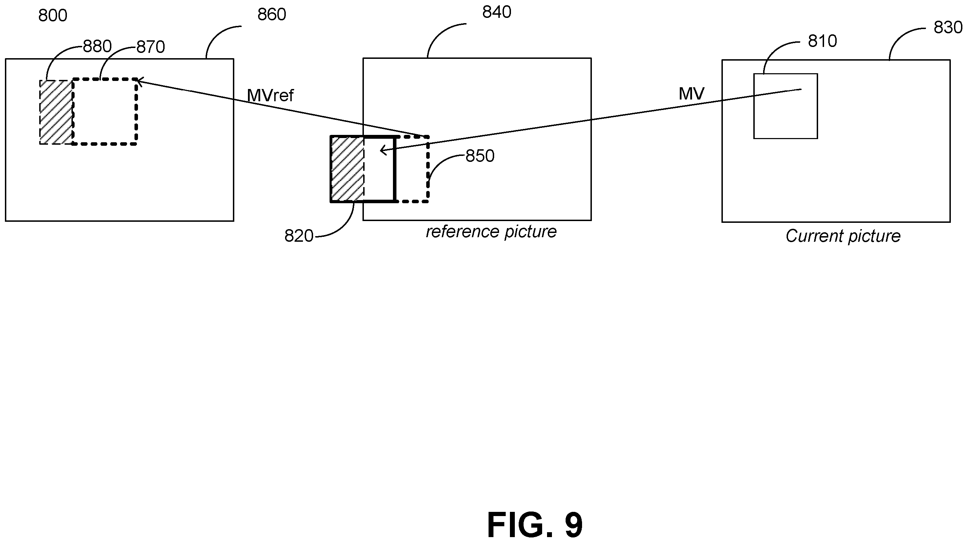

**FIG. 9** illustrates on the fly motion compensated padding (800) for the reference picture (840). Such method does not require additional storage of padding area. If the motion compensated padding is implemented on the fly for deriving the prediction of the current block (810), the blocks (850) in the reference picture (840) that were used to build the reference block prediction (820) (for predicting the current block) are to be identified. For each of these reference blocks (850), one should retrieve the reference picture (860) and the motion vector (MVref) used to derive a reference block (870) in order to predict the reference block (850) and perform the motion compensation of the neighboring samples (880) to fill-in the missing part of (820). This requires accessing several different reference pictures that may burden the memory bandwidth as depicted in FIG. 9. Also, the reference (860) may be not available in the DPB when the current picture is reconstructed if it is no more used as reference.

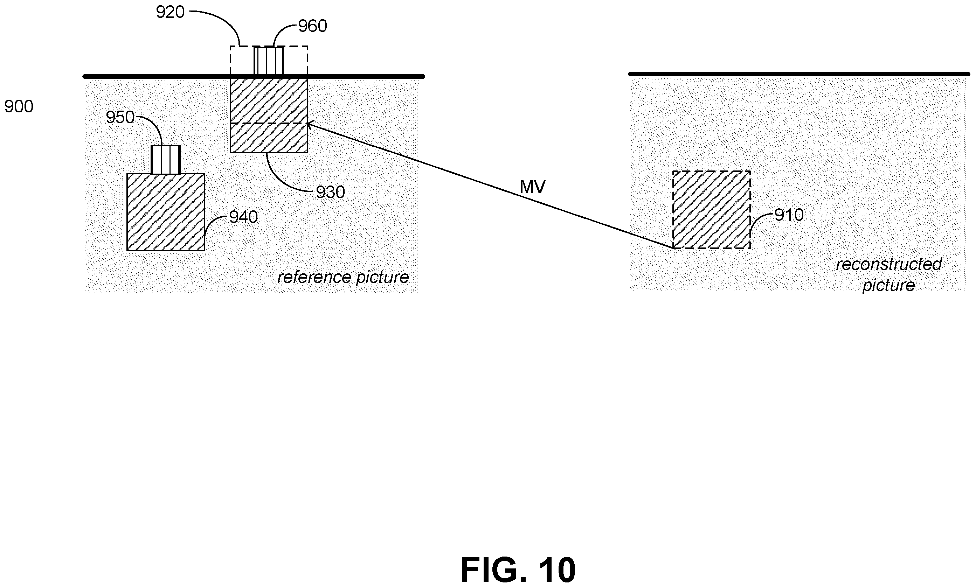

**FIG. 10** illustrates on the fly template matching padding 900 (without additional storage padding area) for the reference picture. Similarly to FIG. 9, if the template matching padding is implemented on the fly for deriving the prediction (920) of the current block (910), one should match a template (930) close to the area to fill (920) to search in the reference picture the best match (940) with (930) and copy the source block (950) to the target (960). This may be repeated for each portion of the area to fill in (920). This would require multiple access locations (search and averaging of targets) in the reference picture that may burden the memory bandwidth as depicted in FIG. 10.

The three padding techniques described above have some drawbacks. Replicating (a.k.a. repetitive) padding is a trivial technique which may be implemented "on-the-fly". However, it may introduce artificial high spatial frequencies. In practice, motion compensated padding cannot be implemented "on-the-fly" because of memory size and memory access burden. Furthermore, some area may not be padded namely when the boundary block is coded in intra. In practice, template matching padding cannot be implemented "on-the-fly" because of memory size and memory access burden. Furthermore, the template matching search is a costly technique. Also, the principle of a process that will fill the padding area of the whole picture after it has been fully reconstructed introduces an additional undesirable delay before starting decoding a next picture.

In contrast, a method of replicating (a.k.a. repetitive) padding is proposed with one or more of the following improvements. In an example, directional padding is used where the direction is derived from a gradient analysis of the reconstructed samples at the picture boundary. In another example, on-the-fly padding is proposed. In another example, an angular delta parameter is clipped. In an example, directional mirroring padding is proposed. The method is extended to bi-prediction case. In another example, directional padding is applied picture padding. Dynamic smoothing of the directional padding is further proposed. In yet another example, multiple directional padding is used for picture padding.

In the following, "on-the-fly" is used to designate the process for filling the inter prediction portion of a block falling (at least partly) outside the boundary of one reference picture which may be carried out within the block prediction stage. "picture padding" is used to designate the process of increasing the reference picture size with padding area outside the regular reconstructed picture area. The picture padding area is normally carried out after the picture has been fully reconstructed.

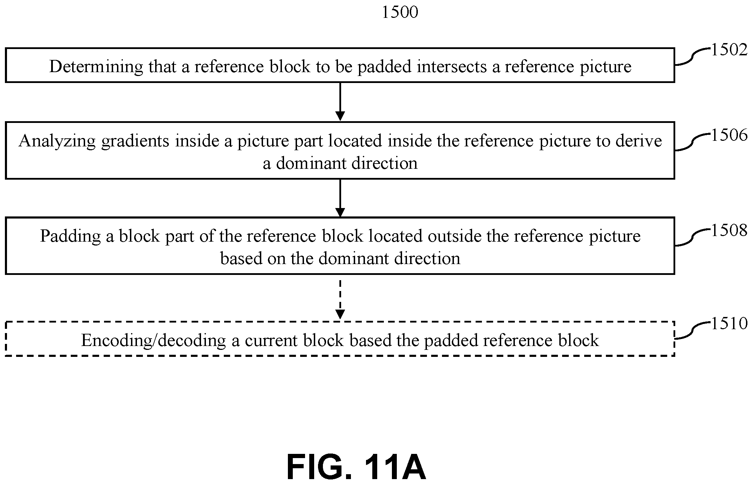

**FIG. 11A** is a block diagram illustrating an example of a padding method (1500) according to one embodiment.

It is determined (1502) that a reference block to be padded (e.g., because the reference block not fully included in the reference picture) intersects a reference picture. Said otherwise, it is determined that some samples of the reference block to be padded are located inside the reference picture, i.e. the reference block to be padded is not completely outside the reference picture.

Responsive to the determining, gradients are analyzed (1506) inside a picture part located inside the reference picture to derive a dominant direction. The picture part may include some samples of the reference block inside the reference picture. In an example, a HoG may be determined. However, the present principles are not limited to this method. Any method allowing to derive a dominant direction from gradients may be used. In an example, the picture part used for gradient analysis may be selected so that it is as close as possible to the block part to be padded, e.g., along the picture frontier bordering the block part to be padded.

The block part of the reference block located outside the reference picture is padded (1508) based on the dominant direction.

The padding method may be part of an encoding method or a decoding method. In an encoding method, a current block is encoded using the padded reference block (1510). In a decoding method the current block is decoded using the padded reference block (1510).

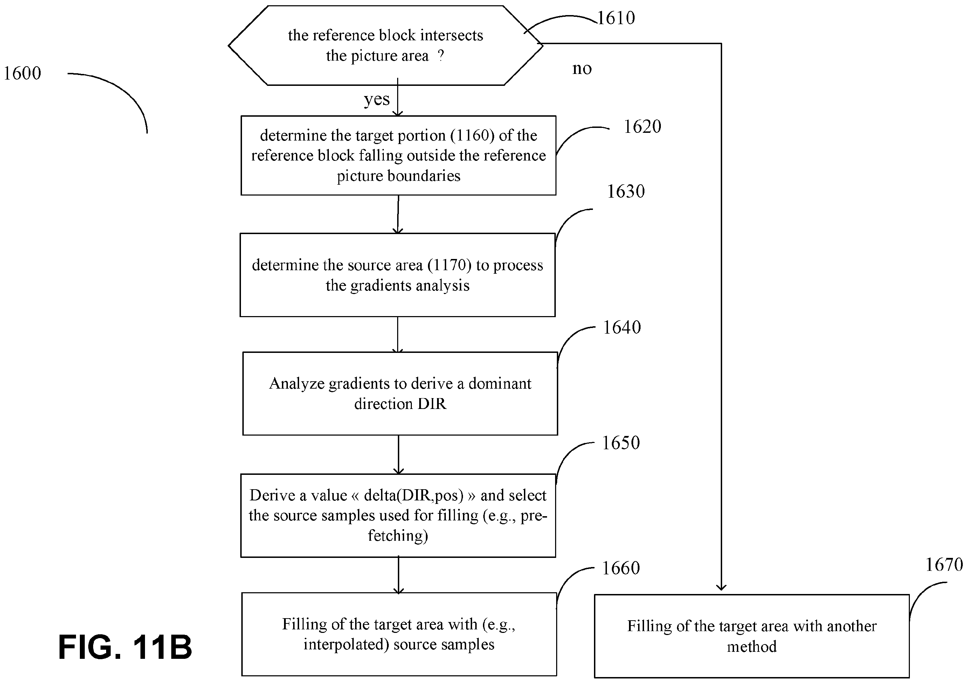

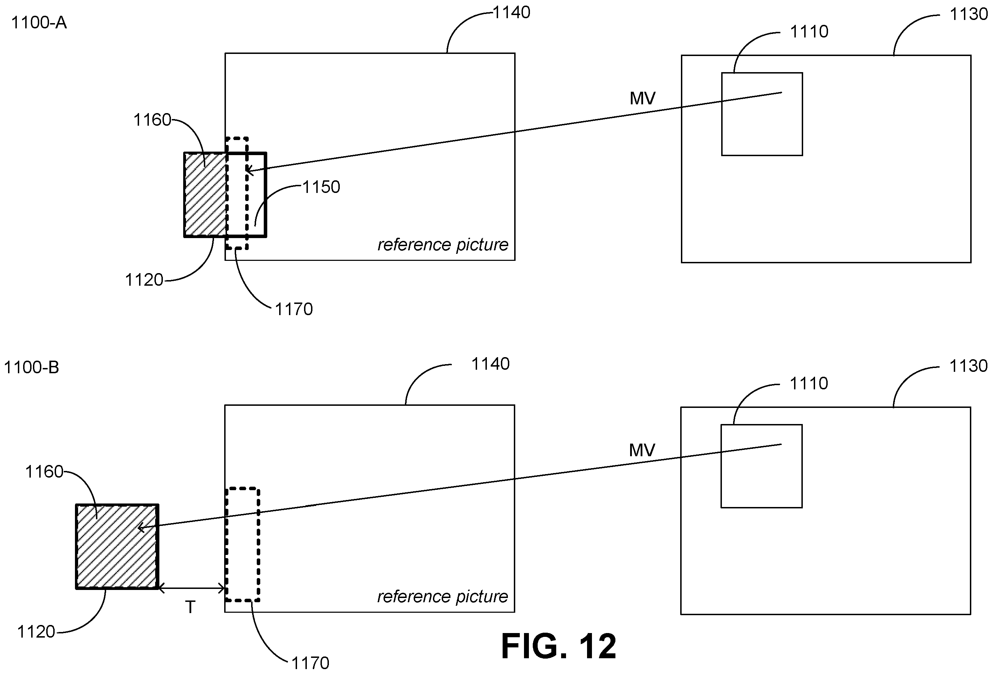

**FIG. 11B** is a block diagram illustrating an example of a padding method according to another embodiment. In this example, directional replication padding is used, where the direction is derived from the gradient analysis of the reconstructed boundary samples. **FIG. 12** depicts a current block (1110) of a current picture (1130) and its reference block (1120) in a reference picture (1140). The reference block (1120) is determined to be padded because some of its samples (1160) are located outside the picture border.

At 1610, it is checked whether the reference block (1120) intersects the picture area of the reference picture (1140). If the reference block (1120) intersects the picture area (variant 1100-A), a source area (1170) may include samples (1150) from the reference block (1120), whereas if the reference block (1160) is outside the picture area (variant 1100-B), the source area cannot include any samples from the reference block and the method cannot apply. In this latter case, another filling method may be used (1670). In a variant, the method may still apply if the source area is not too far (T < threshold) from picture frontier (1100-B). The width (or height) of source area (1170) may be larger or smaller than the width (or height) of the reference block.

At 1620, a target portion (1160) of the reference block (1120) falling outside the reference picture boundaries is determined. The target portion is the portion (hatched part on FIG. 12) of the reference block to be padded.

At 1630, a source area (1170) where to process the gradients analysis is determined. The source area (1170) is included in the reference picture (1140) and is as close as possible to the portion (1160) to be padded.

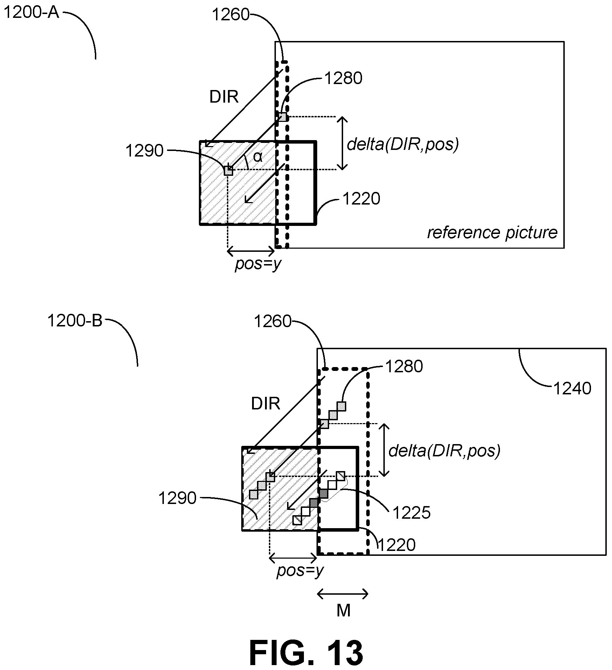

At 1640, the gradients are analyzed. For example, one may use Sobel filter to derive a dominant direction (DIR) inside the source area. The Sobel may be applied on the luma and/or the chroma samples. In an example, a HoG is determined by convolution with Sobel filters in the same way as for DIMD coding mode. The direction in the HoG with the highest magnitude may be identified as the dominant direction. However, the present principles are not limited to this method. Any method allowing to derive a dominant direction from gradients may be used. FIG. 13 illustrates examples of directional padding in a reference block (1220) from a dominant direction (DIR).

At 1650, a value "delta(DIR,pos)" is computed which is the relative distance between a target sample position "pos" (1290), horizontal position y here, to fill in and a reference sample (1280). The value of "delta()" may be determined with the angle direction DIR and further the sample position "pos". In an example, delta(DIR,pos)= pos*tan(α). In a case where the reference block intersects an horizontal border of the reference picture, "pos" is a vertical position.

At 1660, a reference sample (1280) which is at the picture border (1260) is copied at the position "pos" (1290). In case of sub-pel value of delta, the reference sample value may be interpolated (e.g., by an interpolation filter). The filling process is illustrated in FIG. 13 (1200-A and 1200-B). At this step, the codec may select the set of samples (1280) (e.g., one column of samples if the reference block cross vertical picture boundary, or one line if the reference block cross horizontal picture boundary) in the reference picture that will be used to filling the target area. In FIG. 13 (1200-A), the source area (1260) is one pixel wide.

In a variant, the directional replication padding may be adapted to directional mirroring padding as depicted in 1200-B of FIG. 13. In this example, the reference samples 1225 (gray, white and hatched) in the reference area (1260) are selected symmetrically to the reference picture border but in the opposite direction (1280) and copied into the target positions (1290). However, the mirroring padding requires larger reference sample area access (i.e., the source area (1260) is larger than one line/column of samples). This issue may be mitigated by switching to replication (perpendicular) padding when the distance of the reference sample (1280) to the boundary is superior to a pre-determined value "M", i.e., the reference sample at the distance M is copied to all the target positions with distance superior or equal to M along the direction DIR in the target area (1290). In a variant, the replication is made perpendicularly to the picture border.

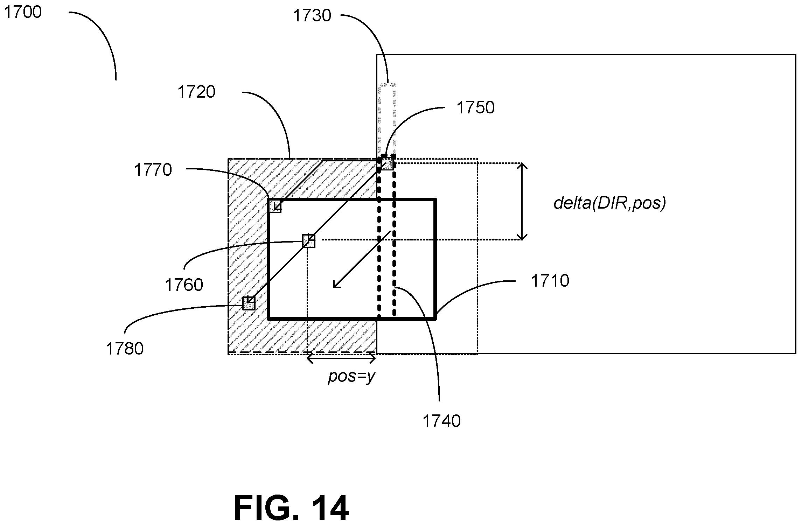

**FIG. 14** illustrates a method for on-the-fly padding according to one embodiment. When performing the padding "on-the-fly" (1700), the reference block (1710) extended with an additional area around it (1720) is extracted from the reference picture and copied into a temporary buffer. The extended area size allows managing the interpolation filter process which requires access to extra samples (e.g., half the number of taps). The part of the extracted area which is out-of-boundary (OOB) may be padded with the method described with respect to FIGs 11A-11B. The source area (1730) may be clipped (1740) to be included inside the extracted area (1720). Alternatively, one may increase the extracted area to fully (or partly) contain the source area (1730). In the example depicted in FIG. 14, the sample (1780) in the extended area is padded along the direction DIR similarly as the sample (1760) inside the reference block area, with the same source sample value (1750). The sample (1770) is also padded with the source sample (1750) because the source area (1730) has been clipped/reduced into (1740).

In a variant (e.g., when the process is carried out "on the fly"), the value of "delta" may be clipped, e.g., to reduce memory bandwidth access. In an example, delta is clipped so that it is inferior to a value deltaₘₐₓ (e.g., pre-determined threshold). In another variant, the value of DIR (angle "α") is clipped so that it is inferior to a value αₘₐₓ (e.g., pre-determined threshold). The derivation of "delta(DIR,pos)" may be carried out from the value DIR similarly as for DIMD coding mode.

In ECM, in case of bi-prediction case, if one uni-directional MC sample is out-of-boundary this sample is marked as "OOB". Then, the sample is set equal to the non-OOB sample instead of weighted average of the two uni-directional prediction sample. In another embodiment, in case of OOB, the uni-directional sample which is marked as OOB may be replaced with this (directional) repetitive or mirror padding prediction.

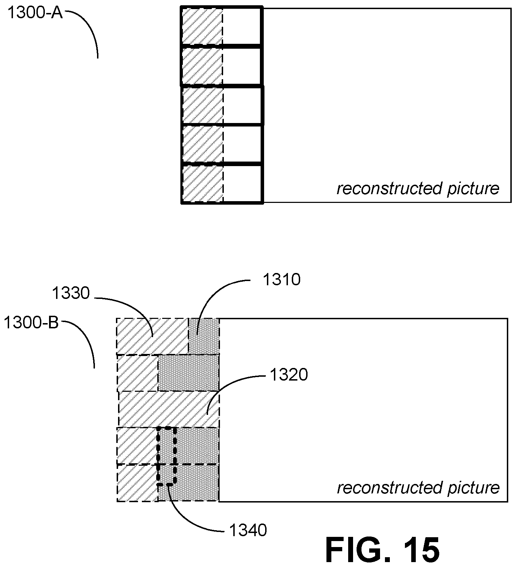

**FIG. 15** illustrates examples of directional picture padding 1300-A and 1300-B. The method described with respect to FIGs 11A-11B may be applied to picture padding. The process described in any of the previous embodiments may be carried out at pre-determined fixed block size and repeated along the picture boundaries as depicted in 1300-A (FIG. 15). Then, the padding process may be repeated for each band perpendicular to the picture frontier (5 bands in the FIG. 15).

In a variant, directional padding can be combined with motion compensated padding (MC-PAD) (1300-B). For example, directional picture padding may be used in case of MC-PAD does not apply (1320) (because the block at picture boundary is coded in intra for example) or to extend (1330) the padding of MC-PAD (1310). In this case, the source and the reference areas (1340) may include samples in the MC-PAD area.

Similarly, the directional padding may be combined with template matching padding (TM-PAD). For example, directional padding may be used in case of the template search of TM-PAD fails or the SAD of the matching structure is above a threshold.

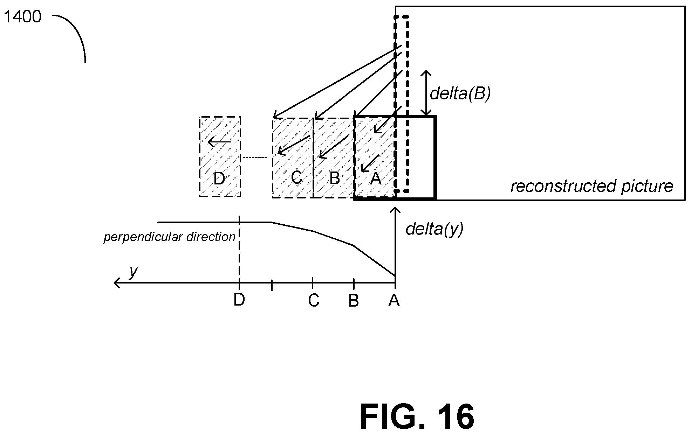

**FIG.16** illustrates example of directional picture padding with smoothed angular direction to tend towards perpendicular replication padding.

In case of the embodiment depicted on FIG. 15 (1300-A) when using directional padding, one issue is the consecutive padded areas tend towards discontinuities for the portions far from the picture boundary, because two bands may have different padding directions. This effect may be mitigated by smoothing the direction while the value of "pos" increases, so that the direction tends towards perpendicular. This may be obtained by a modeling the function "delta(y)" as tending towards constant value as illustrated in FIG. 16.

The value of "delta" may be smoothed to tend towards perpendicular replication padding (delta tends towards fixed limit value). This may be useful for picture padding or when the reference block is far from the picture boundary (e.g., 1100-B on FIG. 12).

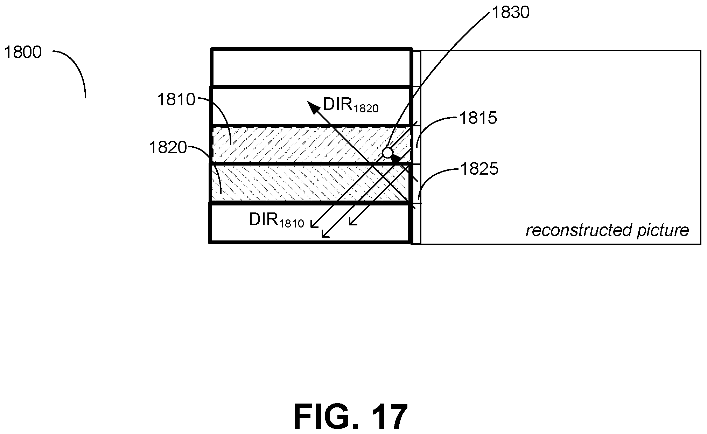

**FIG. 17** illustrates an example (1800) wherein multiple directional padding is used for picture padding. In a variant, the issue of embodiment depicted on FIG. 15 (1300-A) that uses directional padding may be mitigated by padding the reference samples of each band even outside the current band as depicted in FIG. 17. The reference samples (1815) used to derive the DIR₁₈₁₀ of the band (1810) may be used to padd a next band (1820), i.e., may be copied into the next band (1820) following the direction DIR₁₈₁₀. Similarly, the reference samples (1825) used to derive the DIR of the band (1820) may be used to padd the band (1810), i.e., may be copied into the another band (1810) following the direction DIR₁₈₂₀. Consequently, each sample (1830) of the bands may receive several reference samples copied of different bands. The final padded sample value may be averaged over all these copied samples.

All padding methods described above may be part of an encoding method or a decoding method. In an encoding method, a current block is encoded using the padded reference block. In a decoding method the current block is decoded using the padded reference block.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. **In** some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method comprising:
determining that a reference block to be padded intersects a reference picture;
responsive to the determining :
analyzing gradients inside a picture part located inside the reference picture to derive a dominant direction; and
padding a block part of the reference block located outside the reference picture based on the dominant direction.

2. An apparatus comprising one or more processors and at least one memory coupled to said one or more processors, wherein said one or more processors are configured to perform:
determining that a reference block to be padded intersects a reference picture;
responsive to the determining :
analyzing gradients inside a picture part located inside the reference picture to derive a dominant direction; and
padding a block part of the reference block located outside the reference picture based on the dominant direction.

3. The method of claim 1 or the apparatus of claim 2, analyzing gradients inside a picture part located inside the reference picture to derive a dominant direction comprises:
determining a histogram of oriented gradients based on the gradients determined for pixels inside the picture part; and
selecting an orientation with a highest magnitude of the histogram of oriented gradients as the dominant direction.

4. The method of claim 1 or 3 or the apparatus of claims 2 or 3, wherein padding a part of the reference block located outside the reference picture based on the dominant direction comprises :
computing a distance between a target sample in the block part to be padded and a reference sample inside the reference picture based on the dominant direction and a position of the target sample; and
copying, into the target sample, the reference sample located at the computed distance of the target sample.

5. The method of claim 4 or the apparatus of claim 4, wherein the distance is clipped.

6. The method of claim 1 or the apparatus of claim 2, wherein the reference block is extended with an additional area around it, a part of the additional area located outside the reference picture being padded in a same way as the block part of the reference block located outside the reference picture.

7. The method of claim 1 or the apparatus of claim 2, wherein padding a block part of the reference block located outside the reference picture based on the dominant direction comprises copying a reference sample at a distance M to all target samples with distance superior or equal to M along the dominant direction in the block part to be padded.

8. The method of claim 1, wherein the method is repeated for each band of samples perpendicular to a frontier of the reference picture.

9. The apparatus of claim 2, wherein the steps performed by the one or more processors are repeated for each band of samples perpendicular to a frontier of the reference picture.

10. The method of claim 4 or the apparatus of claim 4, wherein the computed distance is smoothed to tend towards perpendicular replication padding when the position of the target sample increases.

11. An encoding method comprising:
padding a reference block using the method of claim 1; and
encoding a current block based on the padded reference block.

12. A decoding method comprising:
padding a reference block using the method of claim 1; and
decoding a current block based on the padded reference block.

13. A computer program comprising program code instructions for implementing the method according to any one of claims 1-9 when executed by a processor.

14. A computer readable storage medium having stored thereon instructions for implementing the method of any one of claims 1-9.
